# EUROPEAN PATENT APPLICATION

(11) **EP 1 634 505 A1**
(43) Date of publication of application: **15.03.2006**
(21) Application number: 04736809.7
(22) Date of filing: 14.06.2004
(51) Int. Cl.: A23L 1/24, A23D 7/00

(54) **ACIDIC OIL-IN-WATER TYPE EMULSION COMPOSITION**

(30) Priority: 16.06.2003 JP 2003170236
(71) Applicant: KAO CORPORATION, Tokyo 103-8210 (JP)
(72) Inventor: NAKAJIMA, Yoshinobu c/o Kao Corp. Res.Laboratories, Tokyo (JP); KAWAI, Shigeru c/o Kao Corp. Res. Laboratories, Tokyo (JP); KUDO, Naoto c/o Kao Corp. Res. Laboratories, Tokyo (JP)
(74) Representative: HOFFMANN EITLE
(86) International application number: PCT/JP2004/008661
(87) International publication number: WO 2004/110172

(57) **Abstract**

The invention relates to an acidic oil-in-water emulsified composition with a high diglyceride content, which contains fats and oils containing 30 wt% or more diglycerides, and enzyme-treated yolk treated with one or more enzymes selected from esterase, lipase and phospholipase, wherein an antioxidant is contained at 1000 to 10000 ppm relative to an oil phase containing the fats and oils and in a weight ratio of 0.4 to 4.5 relative to the net weight of yolk in the enzyme-treated yolk.

## Description

### Field of the invention

The present invention relates to an acidic oil-in-water emulsified composition with a high content of diglyceride, which is preferably used in particularly mayonnaise-like seasonings and dressing-like seasonings.

### Background of the invention

For the purpose of improving the emulsion stability, heat resistance, etc. of acidic oil-in-water emulsified compositions such as dressings, mayonnaises, etc., techniques of using enzyme- treated yolk have been proposed (JP-A 62-29950, JP-A 1-199559, JP-A 11-289979, JP-A 2002-171931).

On one hand, diglycerides have been revealed to have an action of preventing obesity, an action of inhibiting the increase of body weight (JP-A 4-300826, JP-A 10-176181) and also found to have an effect of reducing blood cholesterol levels when used in combination with phyto-sterols (WO-A 99/48378). In addition, acidic oil-in-water emulsified compositions rendered excellent in outward appearance and physical properties by using diglycerides in combination with phospholipase-treated yolk, a crystallization inhibitor, etc., have been disclosed (JP-A 2001-138, JP-A 2002-176952, JP-A 2002-176953).

It is known that the taste of acidic oil-in-water emulsified compositions using yolk becomes a further full-bodied mild taste through the so-called "aging", that is, storage under specific conditions after production (Knowledge of Mayonnaise/Dressing , Chuhei Imai, Sachi Shobo, 1993). By this flavor after aging, the qualitative value of the acidic oil-in-water emulsified composition is significantly varied. The acidic oil-in-water emulsified composition using enzyme-treated yolk is excellent in emulsion stability, heat resistance, etc., but tends to be deficient in full-bodied taste after aging, particularly when fats and oils with a high diglyceride content are used.

### Summary of the invention

The present invention provides an acidic oil-in-water emulsified composition containing fats and oils containing 30 wt% or more diglycerides, and enzyme-treated yolk treated with an enzyme selected from esterase, lipase and phospholipase, wherein an antioxidant is contained at 1000 to 10000 ppm relative to an oil phase containing the fats and oils and simultaneously in a weight ratio of 0.4 to 4.5 relative to the net weight of yolk in the enzyme-treated yolk.

### Detailed description of the invention

The present inventors investigated an acidic oil-in-water emulsified composition with a high diglyceride content, which can have an improved taste after aging even by using an enzyme-treated yolk, and as a result, they found that an acidic oil-in-water emulsified composition with a high diglyceride content, which is excellent in full-bodied taste after aging and exhibits a mild flavor, can be obtained by adding an antioxidant in a specific amount. The inventors also found that by using an emulsifier in combination with the antioxidant, the composition can have a further excellent full-bodied taste after aging to attain a milder flavor, and the present invention was thereby arrived at.

It is not evident why the effect described above is obtained by adding an antioxidant in a specific amount, but it can be estimated as follows:

That is, most of the yolk proteins occur as lipoproteins complexed with a lipid. In the enzyme-treated yolk, the lipid contained in the lipoproteins has been enzymatically decomposed partially or wholly. Accordingly, the structure of these lipoproteins is almost maintained, but is considered to have a constitution and stereostructure different from those of the intact lipoproteins (in the enzyme-untreated yolk) .

It is assumed that the aging of the acidic oil-in-water emulsion is due to mild decomposition of yolk proteins by the action of proteases derived from yolk and spices. It is estimated that the emulsion with a high diglyceride content, when using enzyme-treated yolk, hardly exhibits an aging flavor, because the diglycerides have higher polarity than triglycerides and the stereostructure of the enzyme-treated lipoproteins is easily changed. That is, it is considered that the lipoproteins become those which stereo-structurally hardly undergo the action of proteases, or that the moieties of the lipoproteins to be decomposed by proteases have been changed.

It is not evident why the antioxidant is effective in improving flavor, but it is estimated that the antioxidant is incorporated into the enzyme-treated lipoproteins, thus facilitating interaction with the lipoproteins and changing the microscopic structure of the enzyme-treated lipoproteins, to make them liable to the action of proteases. In this case, the interaction with the lipoproteins occurs more easily in the presence of an emulsifier, to further improve the flavor after aging.

Esterase, lipase or phospholipase is mentioned as the enzyme used for the enzyme-treated yolk in the present invention, and it is essential for the enzyme to be free of protease activity. When a protease is intentionally used, a bitter taste is unfavorably generated.

With respect to the acidic oil-in-water emulsion using enzyme-treated yolk, there is an example in JP-A 2002-171931 where phyto-sterols were added, but in this case, no improvement in aging flavor can be recognized even by the combination with an antioxidant at a predetermined concentration. In JP-A 2002-171931, a protease is simultaneously used for the purpose of preventing yolk from being coagulated upon inactivation treatment of phospholipase (PL) A₂ and thus it is considered that the effect of improving the aging flavor such as in the present invention cannot be brought about because of the mechanism guessed in the present invention. Accordingly, JP-A 2002-171931 is essentially different from the present invention.

From the viewpoint of industrial productivity and physiological effect, the content of diglycerides in the fats and oils used in the acidic oil-in-water emulsified composition of the present invention is 30% by weight (hereinafter referred to simply as %) or more, preferably 35 to 100%, more preferably 50 to 99.9%, still more preferably 70 to 95%, further more preferably 75 to 95%. From the viewpoint of flavor and stability, the number of carbon atoms in the fatty acid residue constituting the diglyceride is preferably 8 to 24, more preferably 16 to 22. From the viewpoint of physiological effect and industrial productivity, the amount of the unsaturated fatty acid residues is preferably 55% or more, more preferably 70 to 100%, still more preferably 90 to 98%, further more preferably 93 to 98%, based on the total fatty acid residues.

With the recent health-oriented world given as a background, a large number of studies on the influence of fatty acids in fats and oils on health have been made, and people tend to refrain from taking trans-unsaturated fatty acids together with saturated fatty acids ("The New England Journal of Medicine," USA, the Massachusetts Medical Society, 1999, Vol. 340, No. 25, pp. 1933-1940; U.S. FDA, "Questions and Answers about Trans Fat Nutrition Labeling," [online], internet
<URL:http://www.cfsan.fda.gov/^{~}dms/gatrans2.html>; "6^{th} revised edition, Required Amount of Nutrition for Japanese (in Japanese) (Ministry of Health and Welfare)"

With this background given, the content of trans-unsaturated fatty acids in fatty acids constituting the diglycerides is preferably 5% or less, more preferably 4% or less, still more preferably 0.1 to 3.5% from the viewpoint of flavor, emulsifying properties, physiological effect and industrial productivity. For formation of diglycerides with fewer trans-unsaturated fatty acids, low-heating history in the process is preferable. For example, when saturated fatty acids are reduced from starting fatty acids, procedures such as wintering are preferable to distillation etc. When diglycerides are produced by reacting fatty acids with glycerin, an enzyme method is preferable to a chemical synthesis method. Measurement of the content of trans-unsaturated fatty acids in diglycerides was in accordance with American Oil Chemists, Society Official Method Ce 1f-96 (GLC method).

The fats and oils may contain triglycerides, monoglycerides and free fatty acids in addition to diglycerides. From the viewpoint of emulsifying properties, flavor and industrial productivity, the content of monoglycerides in the fats and oils is preferably 5% or less, more preferably 0 to 2%, more preferably 0.1 to 1.5%. From the viewpoint of industrial productivity, the fatty acid constituting the monoglyceride is preferably the same as the fatty acid constituting the diglyceride.

From the viewpoint of emulsifying properties, flavor and industrial productivity, the content of free fatty acids (salts) in the fats and oils is preferably 1% or less, more preferably 0 to 0.5%, still more preferably 0.05 to 0.2%.

From the viewpoint of physiological effect, emulsifying properties, flavor and industrial productivity, the content of triglycerides in the fats and oils is preferably 70% or less, more preferably 0 to 65%, even more preferably 0.1 to 50%, still more preferably 3.3 to 29.85%, even more preferably 3.3 to 24.85%.

The diglycerides are obtained by transesterification reaction of glycerin with at least one vegetable fat and oil such as soybean oil, corn oil, sunflower oil, sesame oil, cottonseed oil, rape oil, safflower oil, soybean germ oil, wheat germ oil, palm oil, olive oil and grape seed oil, medium-chain triglyceride, or animal fat and oil, or by esterification reaction of glycerin with a fatty acid derived from at least one of the above fats and oils. The reaction method may be either a chemical reaction method using an alkali catalyst etc. or a biological reaction method using a lipid hydrolase such as lipase.

The melting point of the fats and oils used in the present invention is preferably 20°C or less, more preferably 15°C or less, so that the fats and oils are not crystallized or solidified even in storage at low temperatures in a refrigerator or the like.

The enzyme-treated yolk used in the present invention may be incorporated after yolk in an arbitrary form such as a raw, frozen, powdered, salted or sugared form is treated with the enzyme, or after yolk in the form of egg white-containing whole egg is treated with the enzyme. Alternatively, yolk from which cholesterols were removed or reduced by supercritical CO₂ gas extraction or the like may also be used.

From the viewpoint of flavor and emulsifying properties, the content of the yolk used in the acidic oil-in-water emulsified composition of the present invention is preferably 5 to 20%, more preferably 7 to 17%, still more preferably 8 to 15%, further more preferably 10 to 15%, in terms of liquid yolk.

The enzyme used in enzymatic treatment of the yolk is at least one member selected from the group consisting of esterase, lipase and phospholipase, and is preferably lipase or phospholipase, more preferably phospholipase. The phospholipase is particularly preferably phospholipase A, further preferably phospholipase A₁ and/or A₂. In the present invention, protease treatment is not necessary.

When the enzyme-treated yolk is used as the whole of yolk used in the emulsified composition, the conditions for treatment with the enzyme are selected such that the weight ratio of lysophospholipids (referred to hereinafter as lyso ratio) to total phospholipids is 15% or more, preferably 25 to 75%, still more preferably 29 to 65%, based on the amount of phosphorus. Specifically, when the enzyme activity is 10000 IU/mL, the amount of the enzyme added is preferably 0.0001 to 0.1%, more preferably 0.001 to 0.01%, relative to the yolk, the reaction temperature is preferably 20 to 60°C, more preferably 30 to 55°C, and the reaction time is preferably 1 to 30 hours, more preferably 5 to 25 hours. When the enzyme-treated yolk is used as a part of the yolk used in the emulsified composition, the enzyme treatment conditions may be selected such that the lyso ratio in the total of the enzyme-untreated yolk and enzyme-treated yolk is in the range described above. Such enzyme treatment is conducted preferably in a stage prior to emulsification treatment of a mixture of the respective starting materials.

The antioxidant used in the acidic oil-in-water emulsified composition of the present invention may be any antioxidant which can be used in foods. It is possible to employ, for example, one or more synthetic antioxidants such as butyl hydroxy anisole (BHA), butyl hydroxy toluene (BHT) and tertiary butyl hydroquinone (TBHQ) and one or more naturally occurring antioxidants including not only tocotrienols and tocopherols but also gallic acid, rutin, quercetin, catechin and a rosemary extract.

Among these, tocotrienols and tocopherols are preferably used, and particularly tocopherols are used preferably in respect of flavor, oxidation stability, cost, and solubility in the diglyceride-containing fats and oils. Specific examples include α-tocotrienol, β-tocotrienol, γ-tocotrienol, δ-tocotrienol, α-tocopherol, β-tocopherol, γ-tocopherol, δ-tocopherol, and a mixture of two or more thereof.

For improvement of a full-bodied taste after aging and for balance of the total flavor, the net concentration of the antioxidant in the present invention is 1000 to 10000 ppm, preferably 1200 to 8000 ppm, more preferably 1500 to 5000 ppm, still more preferably 1800 to 3000 ppm, relative to the fat-and oil-containing oil phase. For improvement of full-bodied taste after aging and for balance of the total flavor, the antioxidant is contained in a weight ratio of 0.4 to 4.5, preferably 0.5 to 3, more preferably 0.6 to 2, still more preferably 0.7 to 1.2, relative to the net weight of yolk in the enzyme-treated yolk. The antioxidant may be added to either the oil or aqueous phase or can be added in divided portions to both the phases. Alternatively, the antioxidant may be added to and mixed with the enzyme-treated yolk so that the enzyme-treated yolk and the antioxidant can be coexistent in the acidic oil-in-water emulsified composition. As used in the present invention, the net weight of yolk refers to the weight of liquid yolk containing 10% salt.

In the present invention, an emulsifier is preferably used. The emulsifier together with the antioxidant acts significantly on improvement of the full-bodied taste after aging and on the expression of a mild flavor. From the viewpoint of exhibiting a good full-bodied taste and mild flavor after aging, emulsifying properties and the taste of the emulsifier, the content of the emulsifier is preferably 0.6 to 5%, more preferably 0.7 to 3%, still more preferably 0.8 to 2%, relative to the oil phase.

The emulsifier used in combination with the antioxidant in the present invention includes sorbitan fatty acid ester, polyglycerin fatty acid ester, sucrose fatty acid ester, propylene glycol fatty acid ester, lecithin, lysolecithin etc., among which at least one member selected from sorbitan fatty acid ester, polyglycerin fatty acid ester and sucrose fatty acid ester is preferable with respect to flavor, cost and emulsion stability, and further sorbitan fatty acid ester, polyglycerin fatty acid ester and/or sucrose fatty acid ester are preferable. The emulsifier may be added to either the oil or aqueous phase or can be added in divided portions to both the phases, but is preferably added to the aqueous phase with respect to flavor.

The number of carbon atoms in the fatty acid constituting the sorbitan fatty acid ester used in the present invention is preferably 12 to 22, more preferably 14 to 20. In the present invention, the sorbitan fatty acid ester includes not only sorbitol fatty acid ester and sorbide fatty acid ester but also polysorbates. Those having an HLB value of less than 10 are preferable, and more preferable are those having an HLB value of 0.1 to 7, particularly 0.5 to 3, especially 1 to 2.5.

The average polymerization degree of glycerin in the polyglycerin fatty acid ester used in the present invention is preferably 2 to 12, more preferably 4 to 10. The number of carbon atoms in the fatty acid constituting the polyglycerin fatty acid ester is preferably 12 to 22, more preferably 14 to 20. The esterification degree of polyglycerin hydroxyl group by the constituent fatty acid is preferably 70 to 100%, more preferably 75 to 95%, further more preferably 80 to 90%. The HLB value is preferably less than 10, more preferably 0.1 to 7, still more preferably 0.5 to 4.5, further more preferably 1 to 3.5.

The number of carbon atoms in the fatty acid constituting the sucrose fatty acid ester used in the present invention is preferably 12 to 22, more preferably 14 to 20. The esterification degree of sucrose hydroxyl group by the constituent fatty acid is preferably 50 to 100%, more preferably 60 to 95%, further more preferably 70 to 90%. Those wherein a hydroxyl group not esterified by the fatty acid is acetylated are preferable. Those having an HLB value of less than 10 are preferable, and more preferable are those having an HLB value of 0.1 to 7, particularly 0.5 to 3, especially 1 to 2.

In the present invention, the HLB value is a value determined by the Griffin formula (J. Soc. Cosmet. Chem., 1, 311 (1949)).

The aqueous phase in the acidic oil-in-water emulsified composition of the present invention can be compounded with water, vinegar such as rice vinegar, wine vinegar, apple vinegar, grape vinegar, crop vinegar, synthetic vinegar, etc., seasonings such as common salt, sodium glutamate, sodium succinate, etc., saccharides such as sugar, starch syrup, etc., tasting materials such as sake, sweet sake, etc., various vitamins, organic acids such as citric acid and salts thereof, spices, various vegetable and fruit juices such as lemon juice, thickening polysaccharides such as xanthane gum, gellan gum, guar gum, tamarind gum, carrageenan, pectin, tragacanth gum, soybean polysaccharides, etc., starch such as potato starch, decomposed products thereof and processed starch thereof, soybean protein, milk protein, wheat protein, or separated or decomposed products of these proteins, dairy products such as milk, etc., various phosphates, etc. In the present invention, these can be suitably blended depending on the viscosity, physical properties, etc. of the objective composition.

For flavor and shelf stability, the pH of such aqueous phase is preferably 2 to 6, more preferably 3 to 5. For regulating the pH of the aqueous phase, the above-mentioned acidic seasonings such as vinegar, organic acids, organic acid salts, juices, etc. can be used.

The fats and oils in the acidic oil-in-water emulsified composition of the present invention preferably contain phyto-sterols having an action of reducing blood cholesterol levels. By using the phyto-sterols in combination with diglycerides, the action of reducing blood cholesterol levels can be synergistically increased, and the usefulness of the composition as lipid metabolism-improving food can be further improved. The phyto-sterols include, for example, α-sitosterol, β-sitosterol, stigmasterol, ergosterol, campesterol, etc. Fatty acid esters thereof, ferulic acid esters thereof and glycosides thereof can also be used. In the present invention, at least one of these compounds can be used. The content of phyto-sterols in the acidic oil-in-water emulsified composition of the present invention is preferably 1.2 to 10%, more preferably 2 to 5%.

In the acidic oil-in-water emulsified composition, the weight ratio of the oil phase to the aqueous phase, that is, the oil phase/aqueous phase ratio, is preferably 10/90 to 80/20, more preferably 20/80 to 75/25, still more preferably 35/65 to 70/30.

The acidic oil-in-water emulsified composition of the present invention corresponds to the one widely referred to as mayonnaises and dressings, and examples thereof include, but are not limited to, dressings, semisolid dressings, emulsified liquid dressings, mayonnaises, salad dressings and French dressings as defined in the Japanese Agricultural Standard (JAS).

The acidic oil-in-water emulsified composition of the present invention can be produced for example by the following method. First, phyto-sterols, an oil-soluble emulsifier, and a part or whole of an antioxidant are mixed with fats and oils containing 30 wt% or more diglycerides to prepare an oil phase. Separately, yolk which is partially or wholly enzyme-treated yolk, other water-soluble starting materials, and if necessary a part or whole of an antioxidant are mixed with one another to prepare an oil phase. The oil phase is added to the aqueous phase, and then if necessary preliminarily emulsified, followed by being finely emulsified with an emulsifying machine, whereby an acidic oil-in-water emulsified composition can be obtained. The finely emulsifying machine includes, for example, a high-pressure homogenizer such as manton gaulin, microfluidizer, etc., an ultrasonic emulsifier, and a high-speed revolving emulsifier such as a colloid mill, disper mill, milder, etc., among which the high-speed revolving emulsifier is preferable from the viewpoint of easiness in regulation.

The emulsion thus produced can further be subjected to aging thereby improving the flavor. The aging temperature is preferably 10 to 35°C, more preferably 15 to 30°C, still more preferably 20 to 28°C. The aging time is preferably 1 to 10 weeks, more preferably 2 to 8 weeks, still more preferably 3 to 6 weeks. In the aging step, the emulsion is preferably left without vibrating it.

### Brief description of the drawing

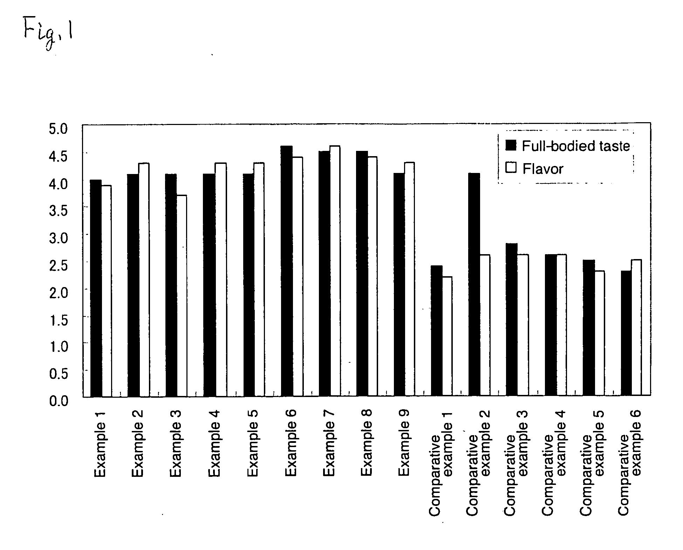

Fig. 1 shows the evaluation results in Examples 1 to 9 and Comparative Examples 1 to 6.

### Examples

Hereinafter, the present invention is described in more detail by reference to the Examples and Comparative Examples, but these examples are not intended to limit the present invention.

### [Preparation of enzyme-treated yolk]

850 g yolk fluid containing 10% common salt, 135 g water and 15 g common salt were mixed with one another and then preheated sufficiently at 50°C, and phospholipase A₂ (Lecitase 10L, manufactured by Novo Nordisk Bioindustry) was added thereto in an amount of 0.003 wt% relative to the yolk fluid. The mixture was reacted at 50°C for 20 hours, and then sterilized (63.5°C, 3.5 minutes) to make an enzyme-treated yolk having a lyso ratio of 57%. The lyso ratio was measured according to a method described in JP-A 2001-138.

### [Preparation of fats and oils with a high diglyceride content]

Ribozyme IM (manufactured by Novo Nordisk Bioindustry) was added to a mixture of 455 parts by weight of soybean oil fatty acids from which saturated fatty acids had been reduced through wintering, 195 parts by weight of rape oil fatty acids and 107 parts by weight of glycerin, followed by esterification reaction thereof at 40°C for 5 hours. Then, the enzyme was separated off by filtration, and the reaction mixture was then subjected to film distillation at 235°C. Then, the resulting sample was washed with water and then deodorized to give fats and oils with a high diglyceride content. The analytical values of the sample were as follows: glyceride composition (wt.%): triglycerides, 13.9; diglycerides, 85.4; and monoglycerides, 0.7; constituent fatty acid composition (wt.%): C16:0, 3.1; C18:0, 1.3; C18:1, 38.1 (cis 38.0, trans 0.1); C18:2, 47.8 (cis 46.6, trans 1.2); and C18:3, 8.3 (cis 6.2, trans 2.1) ; and the content of trans acids in constituent fatty acids, 3.4%.

### Examples 1 to 9, Comparative Examples 1 to 6

Using the above fats and oils with a high diglyceride content, an oil phase having a composition shown in Table 1 was prepared. Then, the aqueous phase materials other than brewed vinegar were mixed with one another to prepare an aqueous phase. The oil phase was added to the aqueous phase while stirring under reduced pressure, and after the fats and oils were added, brewed vinegar was added thereto and preliminarily emulsified. Then, the mixture was finely emulsified with a colloid mill (3000 rpm, clearance 0.35 mm) to produce a mayonnaise-like seasoning having a volume-average particle diameter of 2.0 to 3.5 µm. 250 g soft laminated tube was charged with this sample, and the air in the head space was replaced by nitrogen, and the tube was sealed with aluminum.

The resulting mayonnaise was stored at ordinary temperatures for 1 month, and its flavor was evaluated by a panel of 20 examiners by the following method. The results are shown in Fig. 1.

### [Method of evaluating flavor]

Lettuce salad was used as food to be evaluated, and one sample selected at random from the samples in Examples 1 to 9 and Comparative Examples 1 to 6 was handed as an unsigned mayonnaise sample to each examiner and freely tasted by the examiner, and its full-bodied taste and its flavor as comprehensive taste were valuated under the following criteria. This evaluation was carried out until all the examiners evaluated all the mayonnaise samples. The evaluation results were collected and the average point of each sample was determined.

### [Evaluation criteria]

- Point 5:: Evidently good.
- Point 4:: Good.
- Point 3:: Slightly good.
- Point 2:: Slightly bad.
- Point 1:: Bad.
- Point 0:: Evidently bad.

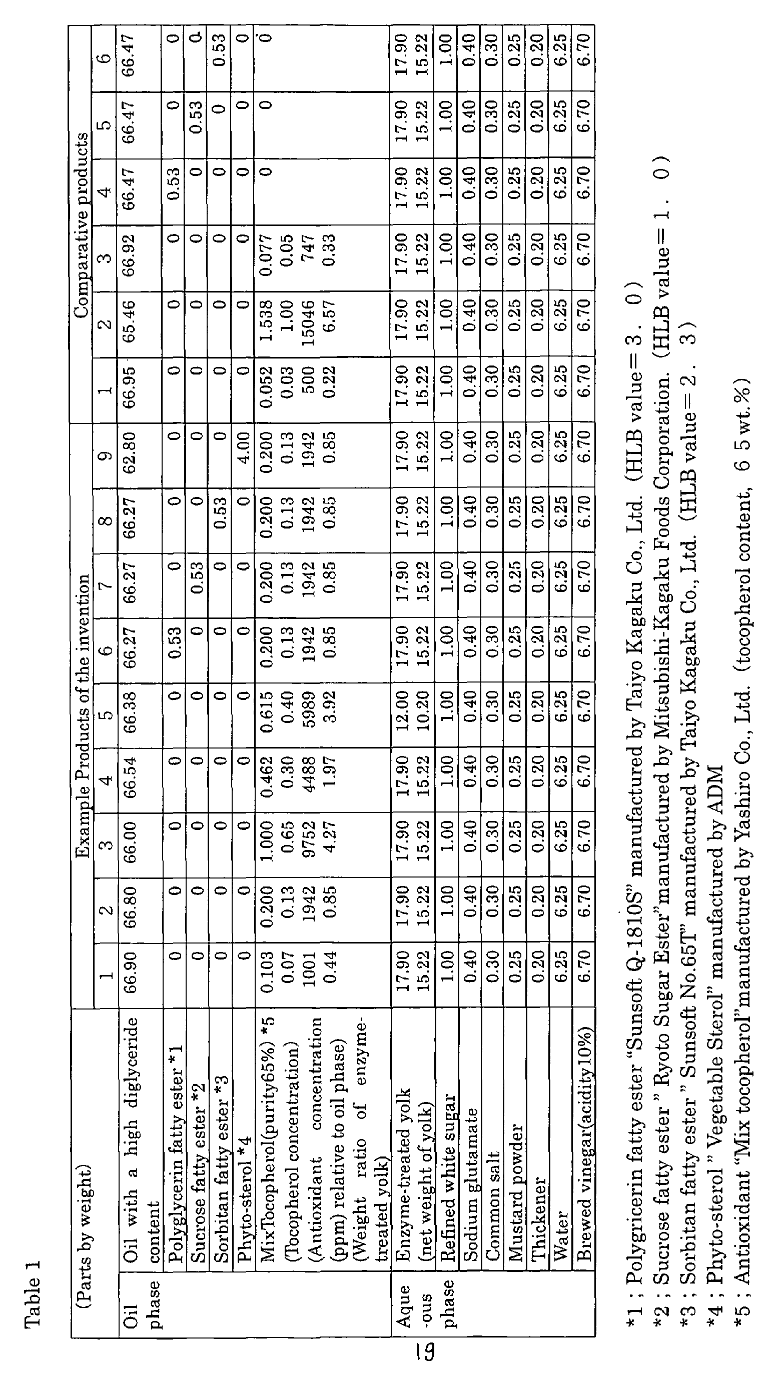

It was revealed that the full-bodied taste of the products of the invention after aging is significantly enhanced and the flavor is improved as compared with those of the comparative products.

## Claims

1. An acidic oil-in-water emulsified composition, comprising fats and oils comprising 30 wt% or more of diglycerides and an enzyme-treated yolk treated with one or more enzymes selected from the group consisting of esterase, lipase and phospholipase, further comprising an antioxidant at 1000 to 10000 ppm relative to an oil phase containing the fats and oils and at a weight ratio of 0.4 to 4.5 relative to the net weight of yolk in the enzyme-treated yolk.

2. The acidic oil-in-water emulsified composition according to claim 1, which further comprises an emulsifier.

3. The acidic oil-in-water emulsified composition according to claim 1 or 2, wherein the antioxidant is one or more members selected from the group consisting of tocopherols and tocotrienols.

4. The acidic oil-in-water emulsified composition according to claim 2 or 3, wherein the emulsifier is at least one or more members selected from the group consisting of sorbitan fatty acid ester, polyglycerin fatty acid ester and sucrose fatty acid ester.

5. The acidic oil-in-water emulsified composition according to any one of claims 1 to 4, which further comprises phyto-sterols.

6. The acidic oil-in-water emulsified composition according to any one of claims 1 to 5, wherein the content of trans-unsaturated fatty acids in fatty acids constituting the diglycerides is 5 wt% or less.
